# EUROPÄISCHE PATENTSCHRIFT

(11) **EP 1 873 368 B1**
(45) Veröffentlichungstag und Bekanntmachung des Hinweises auf die Patenterteilung: **28.07.2010**
(21) Anmeldenummer: 07009111.1
(22) Anmeldetag: 05.05.2007
(51) Int. Cl.: F01N 13/18, F16L 9/06, F16L 11/15, F16L 23/04, F16L 27/11, F16L 33/26

(54) **Flexibles Metallrohr mit Dichtring**
Flexible metal tube with sealing ring
Tuyau métallique flexible avec anneau d'étanchéité

(30) Priorität: 28.06.2006 DE 202006010145 U
(43) Veröffentlichungstag der Anmeldung: 02.01.2008
(73) Patentinhaber: Witzenmann GmbH, 75175 Pforzheim (DE)
(72) Erfinder: Bessler, Frank, 75446 Wiernsheim (DE); Drouart, Nicolas, 75175 Pforzheim (DE); Foitzik, Peter, 75242 Schellbronn (DE); Gukelberger, Marc, 76275 Ettlingen (DE)
(74) Vertreter: Lemcke, Brommer & Partner

(56) Entgegenhaltungen:
- EP-A- 0 226 088
- EP-A- 0 813 007
- EP-A- 1 026 376
- EP-A- 1 647 754
- DE-A- 3 939 572
- DE-A1- 19 833 302
- US-A- 5 454 604

## Beschreibung

Die Erfindung betrifft ein flexibles Metallrohr mit konischem Anschlussbord zum Ansetzen und Befestigen an einen im Querschnitt etwa V-förmigen Flansch oder Wulst mittels einer Rohrschelle.

Ein flexibles Metallrohr der vorliegenden Art umfasst einen ringförmig oder schraubengangförmig gewellten flexiblen Rohrabschnitt und einen im Wesentlichen zylindrischen Endabschnitt, der zur Bildung des Anschlussbordes zum Teil oder auch vollständig konisch aufgeweitet ist. Mit dem konischen Anschlussbord kann das Metallrohr an den im Querschnitt etwa V-förmigen Flansch oder Wulst angesetzt werden, wonach dann eine Rohrschelle über beide Elemente gelegt wird, welche nach dem Schließen das Anschlussbord am Flansch bzw. am Wulst klemmend festlegt.

Ein solches flexibles Metallrohr mit einem gewellten flexiblen Rohrabschnitt ist in aller Regel jedoch dünnwandig ausgebildet, um die erforderliche Flexibilität zu gewährleisten. Dementsprechend ist auch das Anschlussbord dünnwandig ausgebildet, so dass es bei der klemmenden Verbindung mittels der Rohrschelle leicht undefiniert verformt werden kann, was ein ungleichmäßiges Anliegen des Anschlussbordes am Flansch bzw. am Wulst und letztendlich Undichtigkeiten bewirkt.

Ein typisches Einsatzgebiet für ein flexibles Metallrohr der vorliegenden Art ist die gasdichte Verbindung zweier Teile eines Kraftfahrzeug-Verbrennungsmotors, wobei der gewellte flexible Rohrabschnitt des Metallrohrs als Dehnungskörper fungiert und dementsprechend Wärmeausdehnungen aufnimmt bzw. kompensiert. Eine Gasdichtheit des Metallrohrs mitsamt den Verbindungsstellen zu benachbarten Bauteilen ist bei diesem Einsatzzweck unabdingbar. Es ist also unerlässlich, dass das Anschlussbord trotz dessen Dünnwandigkeit rundum anliegend am V-förmigen Flansch oder dem Wulst sitzt und somit zumindest teilweise eine Gasdichtigkeit der Verbindung sicherstellt.

Um eine Gasdichtigkeit der Verbindung des vorliegenden flexiblen Metallrohrs mit dem Flansch oder Wulst zu gewährleisten, trotzdem Verformungen des Anschlussbordes bei der Klemmung durch die Rohrschelle zu befürchten sind, ist es bekannt geworden, zwischen das Anschlussbord und den Flansch oder den Wulst eine ringförmige Dichtung einzulegen. Diese Dichtung besteht ebenfalls aus Metall und wird beim Einbau des flexiblen Metallrohrs, also bei der Herstellung der Verbindung mit dem Flansch oder Wulst, in das Anschlussbord eingelegt.

Nun kommt es jedoch oft vor, dass bei der Montage nicht sorgfältig genug gearbeitet wird und hin und wieder vergessen wird, die Dichtung einzulegen. Wenn eine Dichtung versehentlich nicht eingebaut wurde, ist die Verbindung oft nicht mehr gasdicht, was sich im ungünstigsten Fall jedoch erst nach einer relativ langen Zeit der Benutzung des Metallrohrs herausstellt.

Aus der DE 198 33 302 A1 ist eine Leitungsverbindung zur Abgasrückführung bekannt, bei der ein Leitungsabschnitt eine Hinterschneidung in Form einer Hohlkehle aufweist, in die eine O-Ring-Dichtung eingesetzt ist. Die EP 1 647 754 A2 offenbart einen Dichtring zum Verbinden zweier Rohre, bei dem äussere Randabschnitte zurückgebogen sind, um eine vollständige Rückverformung im Bereich einer umlaufenden Dicke zu verhindern.

Ausgehend von diesem Stand der Technik liegt der vorliegenden Erfindung die Aufgabe zugrunde, ein flexibles Metallrohr der eingangs genannten Art vorzuschlagen, dessen Verbindungstechnik hinsichtlich dessen Funktionssicherheit verbessert ist.

Gelöst ist diese Aufgabe durch ein flexibles Metallrohr mit den Merkmalen des Anspruchs 1 sowie einen Dichtring mit den Merkmalen der Ansprüche 11 oder 12.

Vorteilhafte Ausgestaltungen und Weiterbildungen des erfindungsgemäßen flexiblen Metallrohrs finden sich in den Ansprüchen 2 bis 6.

Gemäß der vorliegenden Erfindung wird also ein flexibles Metallrohr der eingangs genannten Art dadurch verbessert, dass das Anschlussbord in Axialrichtung gesehen eine Hinterschneidung aufweist, und dass in der Hinterschneidung ein separater, flacher, an das Anschlussbord angepasster metallischer Dichtring gehalten ist, welcher konisch geformt ist und welcher zumindest an mehreren umfangsverteilten Stellen seines Außenumfangs einen größeren Durchmesser aufweist als der die Hinterschneidung bildende Teil des Anschlussbordes, so dass er unverlierbar in der Hinterschneidung sitzt, wozu der Dichtring einige umfangsverteilte Nasen oder Vorsprünge aufweist, mit denen er sich in der Hinterschneidung festhält. Aufgrund der erfindungsgemäßen Hinterschneidung kann der Dichtring - obwohl als separates Teil ausgebildet - nicht aus dem Anschlussbord herausfallen, sondern wird dort zurückgehalten und ist vorzugsweise unverlierbar eingelegt. Das flexible Metallrohr wird dann also mitsamt einer schon vorab eingelegten Dichtung ausgeliefert und in dieser Form beim Anwender bis zur Montage vorgehalten. Bei der Montage selbst kann dann das Einlegen des Dichtrings nicht vergessen werden.

Die Hinterschneidung kann dadurch erzeugt werden, dass der Endbereich des konisch aufgeweiteten Anschlussbordes zumindest in Teilbereichen seines Umfangs oder umlaufend wieder nach innen abgebogen ist, und zwar zweckmäßigerweise in einem Bereich, der außerhalb der Anlagefläche des V-förmigen Flansches oder Wulstes liegt, um die dichtende Anlage des Anschlussbordes nicht zu beeinträchtigen. Alternativ kann die Hinterschneidung auch durch eine zumindest bereichsweise umlaufende Einschnürung im Anschlussbord gebildet sein. Wichtig ist jeweils nur die den Dichtring zurückhaltende Funktion der Hinterschneidung.

Die Fertigung des erfindungsgemäßen flexiblen Metallrohrs kann beispielsweise so aussehen, dass die Hinterschneidung erst nach Einlegen des Dichtrings mittels Umformen erzeugt wird. Vorzugsweise wird jedoch der Dichtring erst nach der Herstellung des Anschlussbordes und dessen Hinterschneidung in das Anschlussbord eingesetzt. Im letzteren Falle muss der Dichtring also so ausgestaltet sein, dass er entweder kurzzeitig seinen Durchmesser verkleinern kann, etwa mittels einer elastischen Verformbarkeit, oder aber dass er im eingelegten Zustand plastisch verformt wird und hierbei seinen Durchmesser vergrößert.

Weiterhin bietet es Vorteile, wenn der Dichtring mit mindestens einer umlaufende Sicke versehen ist. Hierdurch bildet sich bei der Montage des erfindungsgemäßen Metallrohrs an der Anschlussfläche des V-förmigen Flansches oder Wulstes eine Liniendichtung aus mit entsprechend höheren Flächenpressungen zur Verbesserung der Dichtwirkung.

Die erfindungsgemäße konische Ausformung des Dichtringes verbessert die definierte Ausbildung der Dichtwirkung nochmals und kann das elastische Verkleinern des Außenumfangs für das Einsetzen des Dichtrings hinter die Hinterschneidung maßgeblich unterstützen.

Besondere Vorteile bietet es schließlich, wenn das Anschlussbord mit mindestens einer Durchbrechung versehen ist, in der zumindest ein Teil des Dichtringes, beispielsweise eine von dessen Nasen, von Außen sichtbar ist. Dies ermöglicht, dass auch dann, wenn das flexible Metallrohr in seiner Einbausituation montiert ist, von Außen erkannt werden kann, ob der Dichtring vorhanden und somit die Gasdichtigkeit der Verbindung gewährleistet ist.

Ein Ausführungsbeispiel für ein erfindungsgemäßes flexibles Metallrohr sowie zwei Ausführungsbeispiele für darin zu verwendende Dichtringe werden im folgenden anhand der beigefügten Zeichnungen näher beschrieben und erläutert.

### Es zeigen:

- Figur 1: eine Schnittdarstellung eines Teils eines erfindungsgemäßen flexiblen Metallrohrs;
- Figur 2: eine Darstellung wie in Figur 1, jedoch eines Metallrohrs nach dem Stand der Technik;
- Figur 3: eine Seitenansicht eines gewellten Dichtrings;
- Figur 4: eine perspektivische Ansicht des Dichtrings aus Figur 3;
- Figur 5: eine Draufsicht auf einen Dichtring mit umfangsverteilten Nasen;
- Figur 6: eine Seitenansicht des Dichtrings aus Figur 5.

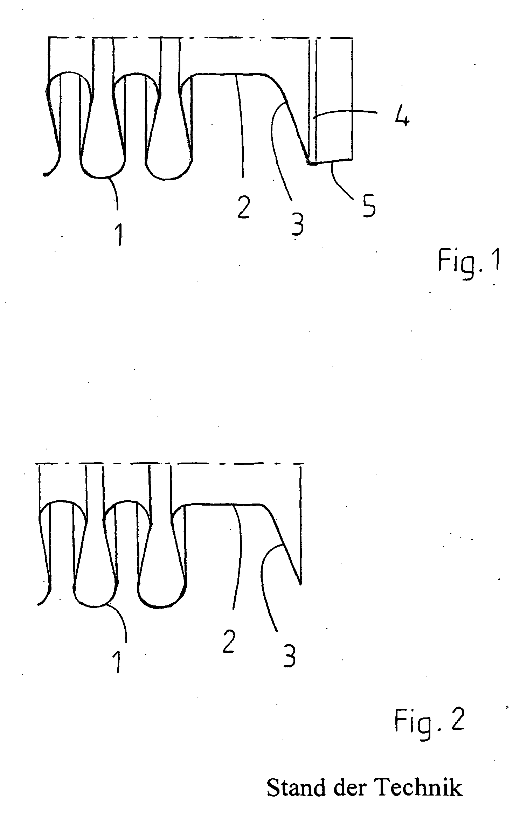

Figur 1 zeigt den interessierenden Teil eines Ausführungsbeispiels eines erfindungsgemäßen flexiblen Metallrohrs in einer schematischen Schnittdarstellung. Deutlich erkennbar ist ein ringgewellter flexibler Rohrabschnitt 1, der zu seinem Ende hin in einen zylindrischen Endabschnitt 2 übergeht. Dieser zylindrische Endabschnitt 2 ist zur Bildung eines Anschlussbordes 3 für einen (nicht dargestellten) im Querschnitt etwa v-förmigen Flansch oder Wulst konisch aufgeweitet.

Im Vergleich zur Figur 2, die ein flexibles Metallrohr zeigt, das nach dem Stand der Technik gefertigt ist und ebenfalls einen ringgewellten flexiblen Rohrabschnitt 1 einen zylindrischen Endabschnitt 2 sowie ein konisch aufgeweitetes Anschlussbord 3 aufweist, ist das in Figur 1 dargestellte, nach der vorliegenden Erfindung ausgestaltete flexible Metallrohr an das Anschlussbord 3 außen anschließend mit einem nach innen abgebogenen Endbereich 5 versehen, so dass sich in Axialrichtung gesehen eine Hinterschneidung 4 ergibt, in welcher ein (hier nicht dargestellter) Dichtring unverlierbar festgehalten werden kann.

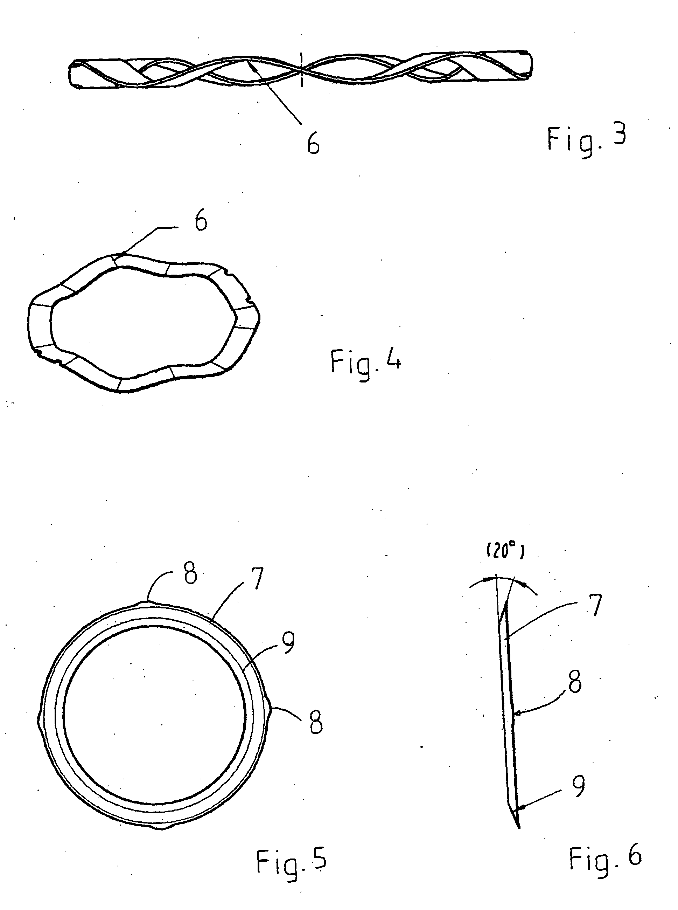

Für diesen Dichtring sind in den Figuren 3 bzw. 4 und 5 bzw. 6 zwei Ausführungsbeispiele dargestellt, wobei die Ausgestaltungen gemäß Figur 3 und Figur 4 nicht Teil der vorliegenden Erfindung sind.

Figur 3 zeigt eine Seitenansicht eines Dichtrings 6, der entlang seines Umfangs mit einer Wellung versehen ist. Figur 4 verdeutlicht dies in einer perspektivischen Darstellung. Der Dichtring 6 ist aus Metall gefertigt und plastisch verformbar, so dass er nach dem Einsetzen in das Anschlussbord 3 sich plastisch verformend gegen dieses flach gedrückt werden kann und hierbei seinen Außendurchmesser vergrößert, so dass er in der Hinterschneidung 4 festgehalten wird und insofern unverlierbar im flexiblen Metallrohr, und zwar an dessen Einbaustelle, gehalten ist.

Das in den Figuren 5 und 6 dargestellte Ausführungsbeispiel eines erfindungsgemäßen Dichtrings 7 ist konisch ausgeformt. Dieser Dichtring 7 ist an seinem Außenumfang mit vier umfangsverteilten Nasen 8 versehen, welche sich in der Hinterschneidung 4 des flexiblen Metallrohrs festhalten und somit den Dichtring 7 unverlierbar machen. Durch seine Konizität ist der Dichtring 7 leicht in die Hinterschneidung 4 einzusetzen, da er sich beim Einsetzen leicht elastisch verformen kann. Außerdem wird der konische Dichtring 7 vom Bediener automatisch in der richtigen Orientierung eingesetzt, was beispielsweise dann wichtig ist, wenn er etwa einseitig beschichtet ist, um die Dichtungswirkung zu verbessern.

Wie Figur 5 schließlich noch verdeutlicht, weist der hier dargestellte Dichtring 7 eine umlaufende Sicke 9 auf, um eine metallische Liniendichtung einerseits am Anschlussbord 3 und andererseits am Flansch oder Wulst zu bilden.

## Patentansprüche

1. Flexibles Metallrohr mit konischem Anschlussbord zum Ansetzen und Befestigen an einen im Querschnitt etwa V-förmigen Flansch oder Wulst mittels einer Rohrschelle, umfassend einen ringförmig oder schraubengangförmig gewellten flexiblen Rohrabschnitt (1) und einen im Wesentlichen zylindrischen Endabschnitt (2), der zur Bildung des Anschlussbordes (3) konisch aufgeweitet ist, wobei das Anschlussbord (3), in Axialrichtung gesehen, eine Hinterschneidung (4) aufweist, und wobei in der Hinterschneidung (4) ein separater, flacher, konisch geformter und an das Anschlussbord (3) angepasster metallischer Dichtring (6, 7) gehalten ist, der zumindest an mehreren umfangsverteilten Stellen seines Außenumfanges einen größeren Durchmesser aufweist, als der die Hinterschneidung (4) bildende Teil des Anschlussbordes (3), so dass er unverlierbar in der Hinterschneidung (4) gehalten ist, wobei er an seinem Außenumfang mit umfangsverteilten Nasen (8) versehen ist.

2. Flexibles Metallrohr nach Anspruch 1,
**dadurch gekennzeichnet,**
**dass** die Hinterschneidung (4) durch einen zumindest teilweise nach innen abgebogenen Endbereich (5) des Anschlussbordes (3) gebildet ist.

3. Flexibles Metallrohr nach Anspruch 1,
**dadurch gekennzeichnet,**
**dass** die Hinterschneidung (4) durch eine zumindest bereichsweise umlaufende Einschnürung im Anschlussbord (3) gebildet ist.

4. Flexibles Metallrohr nach einem der Ansprüche 1 bis 3,
**dadurch gekennzeichnet,**
**dass** der Dichtring (6, 7) so ausgebildet ist, dass er seinen Durchmesser zum Einsetzen in die Hinterschneidung (4) verkleinern kann.

5. Flexibles Metallrohr nach Anspruch 4,
**dadurch gekennzeichnet,**
**dass** der Dichtring (7) mindestens eine umlaufende Sicke (9) zur Bildung einer Liniendichtung aufweist.

6. Flexibles Metallrohr nach mindestens einem der Ansprüche 1 bis 5,
**dadurch gekennzeichnet,**
**dass** das Anschlussbord (3) mit mindestens einer Durchbrechung versehen ist, in der zumindest ein Teil des Dichtringes (6, 7) von Außen sichtbar ist.

## Claims

1. Flexible metal tube having a conical connection cuff for attachment and fastening to a flange or bead of approximately V-shaped cross-section by means of a pipe clip, comprising an annularly or helically corrugated flexible tube portion (1) and a substantially cylindrical end portion (2) which is conically widened to form the connection cuff (3), the connection cuff (3), seen in the axial direction, having an undercut (4), and there being held in the undercut (4) a separate, flat, conically shaped metal sealing ring (6, 7) matched to the connection cuff (3), which sealing ring, at least at a plurality of locations distributed around its outer circumference, is of larger diameter than the portion of the connection cuff (3) forming the undercut (4), so that the sealing ring is held captively in the undercut (4), the sealing ring being provided on its outer circumference with lugs (8) distributed around the circumference.

2. Flexible metal tube according to claim 1,
**characterised in that**
the undercut (4) is formed by an at least partly inwardly bent end region (5) of the connection cuff (3).

3. Flexible metal tube according to claim 1,
**characterised in that**
the undercut (4) is formed by a constriction in the connection cuff (3), which constriction extends around at least some regions of the circumference.

4. Flexible metal tube according to any one of claims 1 to 3,
**characterised in that**
the sealing ring (6, 7) is constructed in such a way that its diameter can be made smaller for insertion into the undercut (4).

5. Flexible metal tube according to claim 4,
**characterised in that**
the sealing ring (7) has at least one circumferential bead (9) for forming a linear seal.

6. Flexible metal tube according to at least one of claims 1 to 5,
**characterised in that**
the connection cuff (3) is provided with at least one opening in which at least a portion of the sealing ring (6, 7) is visible from the outside.

## Revendications

1. Tuyau métallique flexible avec un collet de raccordement conique pour sa mise en place et sa fixation sur une bride ou un bourrelet à section approximativement en forme de V au moyen d'un collier de serrage, comprenant un tronçon de tuyau flexible (1) à ondulation annulaire ou hélicoïdale et un tronçon terminal (2) essentiellement cylindrique qui est élargi coniquement afin de former le collet de raccordement (3), sachant que le collet de raccordement (3) présente, considéré en direction axiale, une contre-dépouille (4), et sachant qu'une bague d'étanchéité métallique plate séparée (6, 7), façonnée sous une forme conique et adaptée au collet de raccordement (3), est maintenue dans la contre-dépouille (4), bague qui présente, au moins en plusieurs endroits répartis sur sa périphérie extérieure, un plus grand diamètre que la partie du collet de raccordement (3) qui forme la contre-dépouille (4), de sorte qu'elle est maintenue de façon imperdable dans la contre-dépouille (4), sachant qu'elle est pourvue d'ergots (8) répartis sur sa périphérie extérieure.

2. Tuyau métallique flexible selon la revendication 1, **caractérisé en ce que** la contre-dépouille (4) est formée par une région terminale (5) du collet de raccordement (3) qui est recourbée au moins partiellement vers l'intérieur.

3. Tuyau métallique flexible selon la revendication 1, **caractérisé en ce que** la contre-dépouille (4) est formée par un rétrécissement au moins sectoriellement entourant dans le collet de raccordement (3).

4. Tuyau métallique flexible selon l'une des revendications 1 à 3, **caractérisé en ce que** la bague d'étanchéité (6, 7) est configurée de telle sorte qu'elle peut diminuer son diamètre pour son insertion dans la contre-dépouille (4).

5. Tuyau métallique flexible selon la revendication 4, **caractérisé en ce que** la bague d'étanchéité (7) présente au moins une moulure entourante (9) pour former un joint d'étanchéité linéaire.

6. Tuyau métallique flexible selon au moins l'une des revendications 1 à 5, **caractérisé en ce que** le collet de raccordement (3) est pourvu d'au moins une interruption, où au moins une partie de la bague d'étanchéité (6, 7) est visible de l'extérieur.
